# EUROPEAN PATENT APPLICATION

(11) **EP 1 972 653 A1**
(43) Date of publication of application: **24.09.2008**
(21) Application number: 08152916.6
(22) Date of filing: 18.03.2008
(51) Int. Cl.: C08K 5/49

(54) **Thermoplastic resin composition and method for stabilizing thermoplastic resin**

(30) Priority: 20.03.2007 JP 2007073326
(71) Applicant: Sumitomo Chemical Company, Limited, Tokyo 104-8260 (JP)
(72) Inventor: Soma, Ryoji, Nara-shi Nara 631-0044 (JP); Kimura, Kenji, Toyonaka-shi Osaka 560-0021 (JP)
(74) Representative: Vossius & Partner

(57) **Abstract**

An object of the present invention is to provide a novel thermoplastic resin composition with improved processing stability, thermal coloration resistance and NOx coloration resistance. Another object of the present invention is to provide a method for stabilizing a thermoplastic res in by improving processing stability, thermal coloration resistance and. NOx coloration resistance of the thermoplastic resin.

There are provided a thermoplastic resin composition, which comprises phosphite esters represented by the following general formula (I): 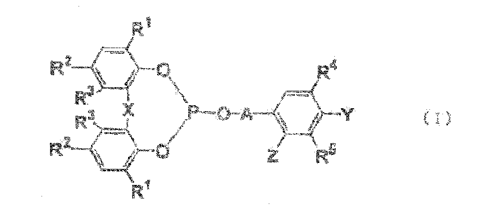 a polymer of dimethyl succinate and 4-hydroxy-2,2,6,6-tetramethyl-1-piperidineethanol, and hydrotalcite in a thermoplastic resin, and a method for stabilizing a thermoplastic resin, which comprises incorporating phosphite esters by the general formula (I), a polymer of dimethyl succinate and 4-hydroxy-2,2,6,6-tetramethyl-1-piperidineethanol, and hydrotalcit- into a thermoplastic resin.

## Description

The present invention relates to a thermoplastic resin composition and a method for stabilizing a thermoplastic resin.

In recent years, as a material of a molded article for a sanitary fixture, a highly crystallizable polypropylene-based resin has been used. In order to prevent thermal oxidation deterioration at molding processing, aging due to heat, oxygen and light at use, and discoloration due to a urine, and stabilize and retain quality for a long period of time, various stabilizers are usually added to such the composition comprising a highly crystallizable polyptopylene-based resin for use in a molded article for a sanitary fixture.

As such the stabilizer, at least one kind stabilizer selected from phosphite esters having a specified structure, a phenol-based stabilizer, a sulfur-based stabilizer, a phosphorus-based stabilizer, and a hindered amine-based stabilizer is disclosed, for example, in JP-A No. 11-222493 (Patent Publication 1). However, such the stabilizer disclosed in Patent Publication 1 has been required to further improve coloration resistance.

In addition, a polypropylene-based resin composition for a sanitary fixture in which a phenol-based compound having a specified structure, and a hindered amine-based light stabilizer are incorporated into a polypropylene-based resin at a ratio of each specified range is disclosed, for example, in JP-A No. 2002-53713 (Paten Publication 2). Such the polypropylene-based resin composition for a sanitary fixture disclosed in Patent Publication 2 has been required to further improve processing stability.

In addition, a thermoplastic elastomer composition in which a phenol-based compound and an anti-weather agent are incorporated into a thermoplastic resin elastomer at a ratio of each specified range is disclosed, for example, in JP-A No. 2001-98163 (Patent Publication 3). Such the thermoplastic elastomer composition disclosed in Patent Publication 3 has been required to further improve processing stability.

Furthermore, a polypropylene-based resin composition in which phosphite esters having a specified structure, and aliphatic amides are incorporated into a polypropylene-based resin at a ratio of each specified range is disclosed, for example, in JP-A No. 2003-268174 (Patent Publication 4). This polypropylene-based resin composition disclosed in Patent Publication 4 has been required to further improve processing stability.
[Patent Publication 1] JP-A No. 11-222493
[Patent Publication 2] JP-A No. 2002-53713
[Patent Publication 3] JP-A No. 2001-98163
[Patent Publication 4] JP-A No. 2003-268174

The present invention was done in order to solve the aforementioned problems, and an object thereof is to provide a novel thermoplastic resin composition having improved processing stability (prevention of thermal oxidation deterioration at molding processing), thermal coloration resistance and NOx coloration resistance.

Another object of the present invention is to provide a method for stabilizing a thermoplastic resin by improving processing stability, thermal coloration resistance and NOx coloration resistance of the thermoplastic resin composition.

The thermoplastic resin composition of the present invention emprises phosphite esters represented by the following general formula (I): 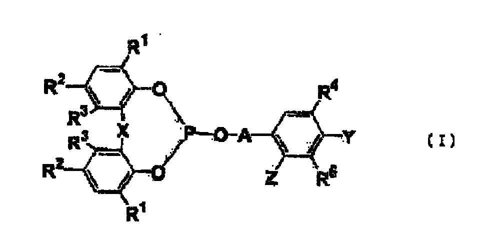 (wherein two R¹s, two R²s, R₄ and R₅ each represent independently a hydrogen atom, an alkyl group having a carbon number of 1 to 8, a cycloalkyl group having a carbon number of 5 to 8, an alkylcycloalkyl group having a carbon number of 6 to 12, an aralkyl group having a carbon number of 7 to 12, or a phenyl group, two R³s each represent independently a hydrogen atom or an alkyl group having a carbon number of 1 to 8, X represents a single bond, a sulfur atom or a -CHR⁶ group (R⁶ represents a hydrogen atom, an alkyl group having a carbon number of 1 to 8 or a cycloalkyl group having a carbon number of 5 to 8), A represents an alkylene group having a carbon number of 1 to 8 or a *-COR⁷ group (R⁷ represents a single bond or an alkylene group having a carbon number of 1 to 8, and * indicates a bond on an oxygen side), one of Y and Z represents a hydroxyl group, an alkoxy group having a carbon number of 1 to 8 or an aralkyloxy group having a carbon number of 7 to 12, and the other of Y and Z represents a hydrogen atom or an alkyl group having a carbon number of 1 to 8), a polymer of dimethyl succinate and 4-hydroxy-2,2,6,6-tetramethyl-1-piperidineethanol, and hydrotalcite in a thermoplastic resin.

It is preferable that the thermoplastic resin composition of the present invention contains 0.005 to 5 parts by weight of the phosphite esters, 0.005 to 5 parts by weight of the polymer of dimethyl succinate and 4-hydtoxy-2,2,6,6-tetramethyl-1-piperdineethanol, and 0.005 to 5 parts by weight of the hydrotalcite based on 100 parts by weight of the thermoplastic resin.

It is more preferable that the thermoplastic resin composition of the present invention contains 0.01 to 1 part by weight of the phosphite esters, 0.01 to 1 part by weight of the polymer of dimethyl succinate and 4-hydroxy-2,2,6,6-tetramethyl-1-piperidineethanol and 0.01 to 1 part by weight of the hydrotalicite based on 100 parts by weight of the thermoplastic resin.

It is preferable that the thermoplastic resin composition of the present invention contains 0.005 to 5 parts by weight of an organic phosphors-based antioxidant different from the phosphite esters. It is more preferable that this organic phosphorus-based antioxidant is at least one kind organic phosphorus-based antioxidant selected from the group consisting of tris(2,4-di-t-butylphenyl) phosphite, bis(2,4-di-t-butylphenyl) pentaerythritol diphosphite, bis(2,6-di-t-butyl-4-methylphenyl) pentaerythritol diphosphite, bis(2,4-di-cumylphenyl) pentaerythritol diphosphite and tetrakis(2,4-di-t-butylphenyl)-4,4'-biphenylene diphosphonite.

The present invention also provides a method for stabilizing a thermoplastic resin, comprising incorporating phosphite esters represented by the following general formula (I): 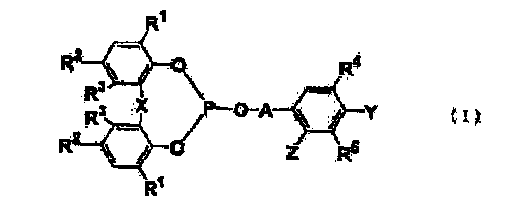 (wherein two R¹s, two R²s, R₄ and R₅ each represent independently a hydrogen atom, an alkyl group having a carbon number of 1 to 8, a cycloalkyl group having a carbon number of 5 to 8, an alkylcycloalkyl group having a carbon number of 6 to 12, an aralkyl group having a carbon number of 7 to 12, or a phenyl group, two R³s each represent independently a hydrogen atom or an alkyl group having a carbon number of 1 to 8, X represents a single bond, a sulfur atom or a -CHR⁶ group (R⁶ represents a hydrogen atom, an alkyl group having a carbon number of 1 to 8 or a cycloalkyl group having a carbon number of 5 to 8), A represents an alkylene group having a carbon number of 1 to 8 or a *-COR⁷ group (R⁷ represents a single bond of an alkylene group having a carbon number of 1 to 8, and * indicates a bond on an oxygen side), one of Y and Z represents a hydroxyl group, an alkoxy group having a carbon number of 1 to 8 or an aralkyloxy group having a carbon number of 7 to 12, and the other of Y and Z represents a hydrogen atom or an alkyl group having a carbon number of 1 to 8), a polymer of dimethyl succinate and 4-hydroxy-2,2,6,6-tetramethyl-1-piperidineethanol, and hydrotalcite into a thermoplastic resin.

In the method for stabilizing a thermoplastic resin of the present invention, it is preferable that 0.005 to 5 parts by weight of the phosphite esters, 0.005 to 5 parts by weight of the polymer of dimethyl succinate and 4-hydroxy-2,2,6,6-tetramethyl-1-piperidineethanol, and 0.005 to 5 parts by weight of the hydrotalcite are incorporated based on 100 parts by weight of the thermoplastic resin.

In addition, in the method for stabilizing a thermoplastic resin of the present invention, it is more preferable that 0.0.1 to 1 part by weight of the phosphite esters, 0.01 to 1 part by weight of the polymer of dimethyl succinate and 4-hydroxy-2, 2, 6, 6-tetramethyl-1-piperidineethanol, and 0.01 to 1 part by weight of the hydrotalcite are incorporated based on 100 parts by weight of the thermoplastic resin.

In the method for stabilizing a thermoplastic resin of the present invention, it is preferable that. 0.005 to 5 parts by weight of an organic phosphorus-based antioxidant different from the phosphite esters is incorporated. It is more preferable that this organic phosphorus-based antioxidant agent is at least one kind organic phosphorus-based antioxidant selected from the group consisting of tris(2,4-di-t-butylphenyl) phosphite, bis(2,4-di-t-butylphenyl) pentaerythritol diphosphite, bis(2,6-di-t-butyl-4-methylphenyl) pentaerythritol diphosphite, bis(2,4-di-cumylphenyl) pentaerythritol diphosphite and tetrakis(2,4-di-t-butylphenyl)-4,4'-biphenylene diphosphonite.

According to the present invention, processing stability, thermal coloration resistance and NOx coloration resistance of the thermoplastic resin can be improved.

The thermoplastic resin composition of the present invention comprises phosphite esters having a specified structure, a polymer of dimethyl succinate and 4-hydroxy-2,2,6,6-tetrametyl-1-piperidineethanol, and hydrotalcite in a thermoplastic resin. Each component of the thermoplastic resin composition of the present invention will be explained in detail below.

### [1] Thermoplastic resin

In the thermoplastic resin composition of the present invention, the previously known appropriate thermoplastic resin can be used without any limitation. Examples of such the thermoplastic resin include a polypropylene-based resin, a polyethylene-based resin such as high density polyethylene (HD-PGE), low density polyethylene (LD-PE), and straight low density polyethylene (LLDPE), a methylpentene polymer, an ethylene/ethyl acrylate copolymer resin, an ethylene/vinyl acetate copolymer resin, polystyrenes such as poly(p-methylstyrene), and poly(α-methylstyrene), an acrylonitrile/styrene copolymer resin, an acrylonitrile/butadiene/styrene copolymer resin, a special acryl rubber/acrylonitrile/styrene copolymer resin, an acrylonitrile/chlorinated polyethylene/styrene copolymer resin, chlorinated polyethylene, polychloroprene, a chlorinated rubber, polyvinyl chloride, polyvinylidene chloride, a methacryl resin, an ethylene/vinyl alcohol copolymer resin, a fluorine resin, polyacetal, a grafted polyphenylene ether resin, a polyphenylene sulfide resin, polyurethane, polyamide, a polyester resin such as polyethylene terephthalate and polybutylene terephthalate, polycarbonate, polyacrylate, polysulfone, polyether ether ketone, polyether sulfone, aromatic polyester resin, a diallyl phthalate prepolymer, a silicone resin, 1, 2-polybutadiene, polyisoprene, a styrene/butadiene copolymer, a butadiene/acrylonitrile copolymer, an ethylene/propylene copolymer, and an ethylene/methyl methacrylate copolymer. Among them, from a viewpoint of better molding processibility, a polyethylene-based resin and a polypropylene-based resin are preferable and, inter alia, a polypropylene-based resin is preferable. As used herein, the polypropylene resin means a polyolefin containing a structural unit derived from propylene, and examples include a crystalline propylene homopolymer, a propylene-ethylene random copolymer, a propylene-α-olefin random copolymer, a propylene-ethylene-α-olefin copolymer, and a polypropylene-based block copolymer consisting of a propylene homopolymer component or a copolymer component mainly consisting of propylene, and a copolymer component of propylene, ethylene and/or α-olefin.

When the polypropylene-based resin is used as the thermoplastic resin in the present invention, as the polypropylene-based resin, one kind may be used, or two or more kinds may be used by blending them.

The α-olefin is usually α-olefin having a carbon number of 4 to 12, and examples include 1-butene, 1-pentene, 1-hexene, 4-methyl-1-pentene, 1-octene, and 1-decene, further preferably 1-butene, 1-hexene and 1-octene.

Examples of the propylene-α-olefin random copolymer include a propylene-1-butene random copolymer, a propylene-1-hexene random copolymer, and a propylene-1-octene random copolymer.

Examples of the propylene-ethylene-α-olefin copolymer include a propylene-ethylene-1-butene copolymer, a propylene-ethylene-1-hexene copolymer, and a propylene-ethylene-1-octene copolymer.

In the polypropylene-based block copolymer consisting of a propylene homopolymer component or a copolymer component consisting mainly of propylene, and a copolymer component of propylene, ethylene and/or α-olefin, examples of the copolymer component consisting mainly of propylene include a propylene-ethylene copolymer component, a propylene-1-butene copolymer component, and a propylene-1-hexene copolymer component, examples of the copolymer component of propylene, ethylene and/or α-olefin include a propylene-ethylene copolymer component, a propylene-ethylene-1-butene copolymer component, a propylene-ethylene-1-hexene copolymer component, a propylene-ethylene-1-octene copolymer component, a propylene-1-butene copolymer component, a. propylene-1-hexene Copolymer Component, and a propylene-1-octene copolymer component. A content of the ethylene and/or the α-olefin having a carbon number of 4 to 12 in the copolymer component of propylene, ethylene and/or α-olefin is usually 0.01 to 20 % by weight.

Examples of the prolypropylene-based block copolymer consisting of a propylene homopolymer component or a copolymer component consisting mainly of propylene, and a copolymer component of propylene, ethylene and/or α-olefin include a propylene-ethylene block copolymer, a (propylene)-(propylene-ethylene) block copolymer, a (propylene)-(propylene-ethylene-1-butene) block copolymer, a (propylene)-(propylene-ethylene-1-hexene) block copolymer, a (propylene)-(propylene-1-butene) block copolymer, a (propylene)-(propylene-1-hexene) block copolymer, a (propylene-ethylene)-(propylene-ethylene-1-butene) block copolymer, a (propylene-ethylene)-(propylene-ethylene-1-hexene) block copolymer, a (propylene-ethylene)-(propylene-1-butene) block copolymer, a (propylene-ethylene)-(propylene-1-hexene) block copolymer, a (propylene-1-butene)-(propylene-ethylene) block copolymer, a (propylene-1-butene)-(propylene-ethylene-1-butene) block copolymer, a (propylene-1-butene)-(propylene-ethylene-1-hexene) block copolymer, a (propylene-1-butene)-(propylene-1-butene) block copolymer, and a (propylene-1-butene)-(propylene-1-hexene) block copolymer.

When the polypropylene-based resin is used as the thermoplastic resin in the present invention, the polypropylene-based resin is preferably a crystalline propylene homopolymer, or a polypropylene-based block copolymer consisting of a. propylene homopolymer component or a copolymer component consisting mainly of propylene, and a copolymer component of propylene, ethylene and/or α-olefin having a carbon number of 4 to 12. Further preferably, the resin is a polypropylene-based block copolymer consisting of a propylene homopolymer component or a copolymer component consisting mainly of propylene, and a copolymer component of propylene, ethylene and/or α-olefin having a carbon number of 4 to 12.

As crystallizability of the polypropylene-based resin, from a viewpoint of rigidity and flaw resistance, higher crystallizability is preferable. As the polypropylene-based resin having higher crystallizability, the resin having 0.95 or more of a fraction of a propylene monomer unit situated at a center of a chain in which 5 consecutive propylene units being a pentad unit in a polypropylene molecule are meso-bound (referred to as pentad fraction, expressed by [mmmm]), which is used as an index of crystallizability, and is obtained by the method published by A. Zambelli et al. (Macromolecules 6, 925, 1973) is preferable.

A process for producing the thermoplastic resin used in the present invention is not particularly limited, but the thermoplastic resin produced by the known polymerization method using the previously known appropriate catalyst can be used. Alternatively, a commercially available thermoplastic resin may be used.

When the polypropylene-based resin is used as the thermoplastic resin in the present invention, examples of the polymerization catalyst include a Ziegler-type catalyst, a Ziegler-Natta-type catalyst, a catalyst system consisting of a Periodic Table Group IV transition metal compound having a cyclopentadienyl ring, and alkylaminoxane, and a catalyst system consisting of a Periodic Table Group IV transition metal compound having a cyclopentadienyl ring, a compound which reacts therewith to form an ionic complex, and an organic aluminum compound.

In addition, when the polypropylene-based resin is used as the thermoplastic resin in the present invention, examples of the polymerization method include a slurry polymerization method using an inert hydrocarbon solvent, a solvent polymerization method, a liquid-phase polymerization method using no solvent, a gas phase polymerization method, and a liquid phase-gas phase polymerization method of continuously performing them. These polymerization methods may be a batch process or a continuous process. Alternatively, the polymerization method may be a method of producing the polypropylene-based resin at one stage, or a method of producing the polypropylene-based resin at a multiple stage of two or more stages. Preferable examples of a process for producing the polypropylene-based copolymer consisting of a propylene homopolymer component or a copolymer component consisting mainly of propylene and a copolymer component of propylene, ethylene and/or α-olefin having a carbon number of 4 to 12 include a multiple stage process of at least two stages consisting of a stage of producing a propylene homopolymer component or a copolymer component consisting mainly of propylene, and a stage of producing a copolymer component of propylene, ethylene and/or α-olefin having a carbon number of 4 to 12.

A melt index (MI) of the thermoplastic resin used in the present invention is not particularly limited. For example, in the case of the polypropylene-based resin, MI is preferably in a range of 0.01 to 100 g/10 min from a viewpoint of molding processibility.

### [2] Phosphite esters

In the present invention, phosphite esters represented by the following general formula (I) is used. 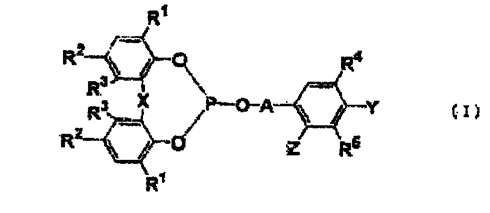 (wherein two R¹s, two R²s, R⁴ and R⁵ each represent independently a hydrogen atom, an alkyl group having a carbon number of 1 to 8, a cycloalkyl group having a carbon number of 5 to 8, an alkylcycloalkyl group having a carbon number of 6 to 12, an aralkyl group having a carbon number of 7 to 12, or a phenyl group, two R³s each represent independently a hydrogen atom, or an alkyl group having a carbon number of 1 to 8, X represents a single bond, a sulfur atom, or a -CHR⁶- group (R⁶ represents a hydrogen atom, an alkyl group having a carbon number of 1 to 8, or a cycloalkyl group having a carbon number of 5 to 8), A represents an alkylene group having a carbon number of 2 to 8, or a *-COR⁷- group (R⁷ represents an alkylene group having a carbon number of 1 to 8, and * indicates a bond on an oxygen side), and one of Y and Z represents a hydroxyl group, and the other represents a hydrogen atom, or an alkyl group having a carbon number of 1 to 8).

In phosphite esters represented by the general formula (I), substituents, two R¹s, two R²s, R⁴ and R⁵ each represent independently a hydrogen atom, an alkyl group having a carbon number of 1 to 8, a cycloalkyl group having a carbon number of 5 to 8, an alkylcycloalkyl group having a carbon number of 6 to 12, an aralkyl group having a carbon number of 7 to 12, or a phenyl group,

Herein, examples of the alkyl group having a number of 1 to 8 include a methyl group, an ethyl group, a n-propyl group, an i-propyl group, a n-butyl group, an i-butyl group, a sec-butyl group, a t-butyl group, a t-pentyl group, an i-octyl group, a t-bctyl group, and a 2-ethylhexyl group, examples of the cycloalkyl group having a carbon number of 5 to 18 include a cyclopentyl group, a cyclohexyl group, a cycloheptyl group, and a cyclooctyl group, examples of the alkylcycloalkyl group having a carbon number of 6 to 12 include a 1-methylcyclopehtyl group, a 1-methylcyclohexyl group, and a 1-methyl-4-i-própylcyclohexyl group, and examples of the aralkyl group having a carbon number of 7 to 12 include a benzyl group, an α-methylbenzyl group and an α, α-dimethylbenzyl group.

In the general formula (1), two R¹s, two R²s, and R⁴ each are preferably independently an alkyl group having a carbon number of 1 to 8, a cycloalkyl group having a carbon number of 5 to 8, or an alkylcycloalkyl group having a carbon number of 6 to 12. Among them, two R¹s and R⁴ each are more preferably independently a t-alkyl group such as a t-butyl group, a t-pentyl group, and a t-octyl group, a cyclohexyl group, and a 1-methylcyclohexyl group.

In the general formula (I), two R²s each are more preferably independently an alkyl group having a carbon number of 1 to 5 such as a methyl group, an ethyl group, a n-propyl group, an i-propyl group, a n-butyl group, an i-butyl group, a sec-butyl group, a t-butyl group, and a t-pentyl group, further preferably a methyl group, a t-butyl group and a t-pentyl group.

Ïn the general formula (I), R⁵ is preferably a hydrogen atom, an alkyl group having a carbon number of 1 to 8, or a cycloalkyl group having a carbon number of 5 to 8, more preferably a hydrogen atom, or an alkyl group having a carbon number of 1 to 5 such as a methyl group, an ethyl group, a n-propyl group, an i-propyl group, a n-butyl group, an i-butyl group, a sec-butyl group, a t-butyl group, and a t-pentyl group.

In the general formula (I), substituents, two R³s each represent independently a hydrogen atom, or an alkyl group having a carbon number of 1 to 8, and examples of the alkyl group having a carbon number of 1 to 8 include the same alkyl groups as the aforementioned alkyl groups. Preferable is a hydrogen atom or an alkyl group having a carbon number of 1 to 5, and more preferable is a hydrogen atom or a methyl group.

In the general formula (I), a substituent X represents a single bond, a sulfur atom or a methylene group optionally substituted with an alkyl group having a carbon number of 1 to 8 or a cycloalkyl group having a carbon number of 5 to 8. Herein, examples of the alkyl group having a carbon number of 1 to 8 and the cycloalkyl group having a carbon number of 5 to 8 with which the methylene group may be substituted include the same alkyl groups and cycloalkyl groups as the aforementioned alkyl groups and cycloalkyl groups, respectively. The substituent X is preferably a single bond, a methylene group, or a methylene group substituted with a methyl group, an ethyl group, a n-propyl group, an i-propyl group, a n-butyl group, an i-butyl group, or a t-butyl group.

In the general formula (I), a substituent A represents an alkylene group having a carbon number of 2 to 8, or a *-COR⁷-group (R⁷ represents a single bond or an alkylene group having a carbon number of 1 to 8, and * indicates a bond on an oxygen side).

Herein, examples of the alkylene group having a carbon number of 2 to 8 include an ethylene group, a propylene group, a butylene group, a pentamethylene group, a hexamethylene group, an octamethylene group, and a 2,2-dimethyl-1,3-propylene group, preferably a propylene group. * in the -COR⁷- group indicates that a carbonyl group is bound to an oxygen atom of a phosphite group. Examples of the alkylene group having a carbon number of 1 to 8 in R⁷ include a methylene group, an ethylene group, an ethylene group, a propylene group, a butylene group, a pentamethylene group, a hexamethylene group, an octamethylene group, and a 2,2-dimethyl-1,3-propylene group. R⁷ is preferably a single bond or an ethylene group.

In the general formula (I), one of substituents Y and Z represents a hydroxyl group, and the other represents a hydrogen atom or an alkyl group having a carbon number of 1 to 8. Herein, examples of the alkyl group having a carbon number of 1 to 8 include the same alkyl groups as those described above.

Preferable examples of the phosphite esters include 2,4,8,10-tetra-t-butyl-6-[3-(3-methyl-4-hydroxy-5-t-butylpheny 1)propoxy]dibenzo[d,f][1,3,2]dioxaphosphepine, 6-[3-(3,5-di-t-butyl-4-hydroxyphenyl)propoxy]-2,4,8,10-tetra-t -butyldibenzo[d,f][1,3,2]dioxaphosphepine, 6-[3-(3,5-di-t-butyl-4-hydroxyphenyl)propoxy]-4,8-di-t-butyl-2 ,10-dimethyl-12H-dibenzo[d,g][1,3,2]dioxaphosphosine, and 6-[3-(3,5-di-t-butyl-4-hydroxyphenyl)propionyloxy]-4,8-di-t-bu tyl-2,10-dimethyl-12H-dibenzo[d,g][1,3,2]dioxaphosphosine. Among them, from a viewpoint of highness of stabilizing effect and coloration resistance of the resulting thermoplastic resin composition, it is particularly preferable to use, as phosphite esters, 2,4,8,10-tetra-t-butyl-6-[3-(3-methyl-4-hydroxy-5-t-butylpheny l)propoxy]dibenzo[d,f][1,3,2]dioxaphosphepine.

In the thermoplastic resin composition of the present invention, an incorporation amount of the phosphite esters is usually in a range of 0.005 to 5 parts by weight based on 100 parts by weight of the thermoplastic resin. By setting an incorporation amount of the phosphite esters at. 0.005 part by weight or more based on 100 parts by weight of the thermoplastic resin, there is a tendency that the stabilizing effect is improved. And, by setting an incorporation amount of the phosphite esters at 5 parts by weight or less based on 100 parts by weight of the thermoplastic resin, bleeding phenomenon in which phosphite esters appear on a surface of the thermoplastic resin composition tends to be reduced, being preferable. Further, it is particularly preferable that an incorporation amount of the phosphite esters is in a range of 0.01 to 1 part by weight based on 100 parts by weight of the thermoplastic resin.

### [3] Polymer of dimethyl succinate and 4-hydroxy-2,2,6,6-tetramethyl-1-piperidineethanol

In the thermoplastic resin composition of the present invention, a polymer of dimethyl succinate and 4-hydroxy-2,2,6,6-tetramethyl-1-piperidineethanol is incorporated. This polymer of dimethyl succinate and 4-hydroxy-2,2,6,6-tetramethyl-1-piperidineethanol is one kind of hindered amine-based light stabilizers which have a molecular weight of 3100 to 4000, capture a radical generated by light (ultraviolet-ray), and prevent deterioration of an organic material and a polymer material due to degradation of hydroperoxide. As such as the polymer of dimethyl succinate and 4-hydroxy-2,2,6,6-tetramethyl-1-piperidineethanol, specifically, a commercially available appropriate polymer (TINUVIN 622, manufactured by Ciba Specialty Chemicals) can be used.

In the thermoplastic resin composition of the present invention, an incorporation amount of the polymer of dimethyl succinate and 4-hydroxy-2,2,6,6-tetramethyl-1-piperidineethanol is in a range of 0.005 to 5 parts by weight based on 100 parts by weight of the thermoplastic resin. By setting an incorporation amount of the polymer of dimethyl succinate and 4-hydroxy-2,2,6,6-tetramethyl-1-piperidineethanol at 0.005 part by weight or more based on 100 parts by weight of the thermoplastic resin, there is a tendency that the stability effect is improved. And, by setting an incorporation amount of the polymer of dimethyl succinate and 4-hydroxy-2,2,6,6-tetramethyl-1-piperidineethanol at 5 parts by weight or less based on 100 parts by weight of the thermoplastic resin, bleeding phenomenon in which the polymer of dimethyl succinate and 4-hydroxy-2,2,6,6-tetramethyl-1-piperidineethanol appears on a surface of the thermoplastic resin composition tends to be reduced, being preferable. Further, an incorporation amount of the polymer of dimethyl succinate and 4-hydroxy-2,2,6,6-tetramethyl-1-piperidineethanol is particularly preferably in a range of 0.01 to 1 part by weight based on 100 parts by weight of the thermoplastic resin.

### [4] Hydrotalcite

The thermoplastic resin of the present invention is characterized in that hydrotalcite is further incorporated in addition to the thermoplastic resin, the phosphite esters of a specified structure, and the polymer of dimethyl succinate and 4-hydroxy-2,2,6,6-tetramethyl-1-piperidineethanol. By incorporation of this hydrotalcite, processing stability (prevention of thermal oxidation deterioration at molding processing), coloration resistance and NOx coloration resistance of the thermoplastic resin composition are considerably improved as compared with the previous one. This is thought to be due to that incorporation of hydrotalcite inactivates a catalyst residue in the thermoplastic resin, thereby, deterioration of the thermoplastic resin is suppressed.

Hydrotalcite is a double salt denoted by the following formula:

M²⁺₈₋ₓ·M³⁺ₓ·(OH)₁₆·(CO₃)·pH₂O

In the formula, M²⁺ denotes at least one divalent metal selected from Mg²⁺, Fe²⁺, Ca²⁺, Zn²⁺, Co²⁺, and Ni²⁺, M³⁺ denotes at least one kind trivalent metal selected from Al³⁺, Fe³⁺, and Mn³⁺, and x denotes a numerical value in a range of 1 to 5. And, p denotes a numerical value of 0 or more, and is appropriately changed by a moisture.

A natural mineral having the name such as hydrotalc stone, stichite and pyroaurite is also hydrotalcite in the present invention. Inter alia, hydrotalcite represented by the following formula is particularly preferable.

Mg₆Al₂(OH)₁₆(CO₃)·4H₂O

Hydrotalcite used in the present invention may be a natural product or a synthetic product, and can be used irrespective of a crystal structure and a crystal particle diameter thereof. Specifically, commercially available appropriate hydrotalcite (e. g. DHT-4A, manufactured by Kyowa Chemical Industry Co., Ltd) can be used.

In the thermoplastic resin composition of the present invention, an incorporation amount of the hydrotalcite is usually in a range of 0.005 to 5 parts by weight based on 100 parts by weight of the thermoplastic resin. By setting an incorporation amount of hydrotalcite at 0.005 part by weight or more based on 100 parts by weight of the thermoplastic resin, there is a tendency that the stabilizing effect of the resulting thermoplastic resin composition is improved and, by setting an incorporation amount of the hydrotalcite at 5 parts by weight or less based on 100 parts by weight of the thermoplastic resin composition, bleeding phenomenon in which hydrotalcite appears on a surface of the thermoplastic resin composition tends to be reduced, being preferable. Further, it is particularly preferable that an incorporation amount of hydrotalcite is in a range of 0.01 to 1 part by weight based on 100 parts by weight of the thermoplastic resin composition.

According to the present invention, by incorporation of the phosphite esters having a specified structure represented by the formula (I), the polymer of dimethyl succinate and 4-hydroxy-2,2,6,6-tetramethyl-1-piperdineethanol, and the hydrotalcite, the thermoplastic resin composition is provided, whose processing stability, thermal coloration resistance, and NOx coloration resistance are improved as compared with those of the previous composition, as described above.

Whether processing stability has been improved by the thermoplastic resin composition of the present invention or not can be assessed, for example, as follows: First, the thermoplastic resin composition is kneaded at 230 °C and at a screw rotation number of 50 rpm using a monoaxial extrusion molding machine having a diameter of 30 mm to obtain a pellet (1), and repetitive extrusion molding of kneading this pellet (1) at 250°C and at a screw rotation number of 50 rpm using a monoaxial extrusion molding machine having a diameter of 30 mm to obtain a pellet is performed five times to obtain a pellet (2), the pellet (1) and the pellet (2) are measured for a MI value using a melt indexer according to JIS K7210, and processing stability is measured by a difference between a MI value of the pellet (2) and a MI value of the pellet (1). As a difference between a MI value of the pellet (2) and a MI value of the pallet (1) is smaller, it is assessed that processing stability is higher.

In addition, whether thermal coloration resistance has been improved by the thermoplastic resin composition of the present invention or not can be assessed, for example, as follows: Pellets (1) and (2) obtained as in the aforementioned assessment of processing stability are pressed into a sheet having a thickness of 1 mm with a pressing machine, a yellowness index (YI) value is measured using a chromatometer according to JIS K7105, and thermal coloration resistance is assessed by a difference between a YI value of the pellet (2) and a YI value of the pellet (1). As a difference between a YI value of the pellet (2) and a YI value of the pellet (1) is smaller, it is assessed that thermal coloration resistance is higher.

In addition, whether NOx coloration resistance has been improved by the thermoplastic resin composition of the present invention or not can be assessed, for example, as follows: The pellet (1) obtained as in the aforementioned assessment of processing stability was injection-molded into a sheet having a thickness of 1 mm at 230 °C, a YI value is measured using a chromatometer according JIS K7105, and the sheet is exposed to 50 ppm NOx for 2 weeks according to JIS LO855. A YI value of the sheet after NOx exposure for 2 weeks is similarly measured using a chromatometer, and NOx coloration resistance is assessed by a difference between a YI value of the sheet after NOx exposure for 2 weeks and a YI value of the sheet before NOx exposure. As a difference between a YI value of the sheet after NOx exposure for 2 weeks and a YI value of the sheet before NOx exposure is smaller, it is assessed that NOx coloration resistance is higher.

In the thermoplastic resin composition of the present invention, as described above, it is preferable that 0.005 to 5 parts by weight of the phosphite esters, 0.005 to 5 parts by weight of the polymer of dimethyl succinate and 4-hydroxy-2,2,6,6-tetramethyl-1-piperidineethanol, and 0.005 to 5 parts by weight of the hydrotalcite are contained based on 100 parts by weight of the thermoplastic resin, and it is particularly preferable that 0.01 to 1 part by weight of the phosphite esters, 0.01 to 1 part by weight of the polymer of dimethyl succinate and 4-hydroxy-2,2,6,6-tetramethyl-1-piperidineethanol, and 0.01 to 1 part by weight of the hydrotalcite are contained based on 100 parts by weight of the thermoplastic resin.

### [5] Organic phosphorus-based antioxidant

In the thermoplastic resin composition of the present invention, it is preferable that, in addition to the thermoplastic resin, the phosphite esters having a specified structure, the polymer of dimethyl succinate and 4-hydroxy-2,2,6,6-tetramethyl-1-piperdineethanol, and the hydrotalcite, an organic phosphorus-based antioxidant other than the phosphite esters is further incorporated. By further incorporation of such the organic phosphorus-based antioxidant, the thermoplastic resin composition with further improved processing stability and coloration resistance can be realized.

Examples of the organic phosphorus-based antioxidant include tris(2,4-di-t-butylphenyl) phosphite, bis(2,4-di-t-butylphenyl) pentaerythritol diphosphite, bis(2,6-di-t-butyl-4-methylphenyl) pentaerythritol diphosphite, bis(2,4-di-cumylphenyl) pentaerythritol diphosphite, and tetrakis(2,4-di-ti-butylphenyl)-4, 4'-biphenylene diphosphonite, and it is preferable to use at least one kind selected from them as the organic phosphorus-based antioxidant. Inter alia, from a viewpoint of the stabilizing effect and coloration resistance, it is preferable to incorporate tris(2,4-di-t-butylphenyl) phosphite as the organic phosphorus-based antioxidant.

When the organic phosphorus-based antioxidant is incorporated into the thermoplastic resin composition of the present invention, an incorporation amount is not particularly limited, but is preferably in a range of 0.005 to 5.0 parts by weight based on 1.00 parts by weight of the thermoplastic resin. By setting an incorporation amount of the organic phosphorus-based antioxidant at 0.005 part by weight or more based on 100 parts by weight of the thermoplastic resin, the stabilizing effect is easily Obtained and, by setting an incorporation amount of the organic phosphorus-based antioxidant at 5.0 parts by weight or less based on 100 parts by weight of the thermoplastic resin ,there is a tendency that bleeding becomes difficult to occur, being preferable. Further, it is particularly preferable that an incorporation amount of the organic phosphorus-based antioxidant is in a range of 0.01 to 1 part by weight based on 100 parts by weight of the thermoplastic resin.

In the thermoplastic resin composition of the present invention, the previously known appropriate additive may be further incorporated in such a range that the effect of the present invention is not hampered. Examples of such the additive include an antistatic agent, an ultraviolet absorbing agent, a nucleating agent, a lubricant, a neutralizing agent, an auxiliary stabilizer, a metal inactivating agent, a flame-retardant, a foaming agent, a filler, and a pigment.

The present invention also provides a method for stabilizing a thermoplastic resin, comprising incorporating phosphite esters represented by the general formula (I), a polymer of dimethyl succinate and 4-hydroxy-2,2,6,6-tetramethyl-1-piperidineethanol, and hydrotalcite into a thermoplastic resin. According to such the method of the present invention, processing stability, thermal coloration resistance, and NOx coloration resistance of the thermoplastic resin are improved, thereby, the stabilized thermoplastic resin can be provided. In the method for stabilizing a thermoplastic resin of the present invention, respective components to be incorporated into the thermoplastic resin are the same as respective components in the aforementioned thermoplastic resin composition of the present invention.

Also, in the method for stabilizing a thermoplastic resin of the present invention, like the thermoplastic resin composition of the present invention, it is preferable that 0.005 to 5 parts by weight of the phosphite esters, 0.005 to 5 parts by weight of the polymer of dimethyl succinate and 4-hydroxy-2,2,6,6-tetramethyl-1-piperidineethanol,and 0.005 to 5 parts by weight of the hydrotalcite are incorporated based on 100 parts by weight of the thermoplastic resin. Further, it is more preferable that 0.01 to 1 part by weight of the phosphite esters, 0.01 to 1 part by weight of the polymer of dimethyl succinate and 4-hydroxy-2,2,6,6-tetramethyl-1-piperidineethanol, and 0.01 to 1 part by weight of the hydrotalcite are incorporated based on 100 parts by weight of the thermoplastic resin.

In addition, also in the method for stabilizing a thermoplastic resin of the present invention, it is preferable that, in addition to the phosphite esters represented by the general formula (I), the polymer of dimethyl succinate and 4-hydroxy-2,2,6,6-teramethyl-1-piperidineethanol, and the hydrotalcite, an organic phosphorus-based antioxidant other than the phosphite esters is incorporated. The organic phosphorus-based antioxidant which is preferably incorporated in this method for stabilizing a thermoplastic resin of the present invention is the same as the organic phosphorus-based antioxidant which is preferably incorporated in the aforementioned thermoplastic resin composition of the present invention. Also in the method for stabilizing a thermoplastic resin of the present invention, base on the same reason as that described above, it is preferable that the organic phosphorus-based antioxidant is incorporated at 0.005 to 5 parts by weight based on 100 parts by weight of the thermoplastic resin.

Also in the method for stabilizing a thermoplastic resin of the present invention, the previously known appropriate additive such as an antistatic agent, a ultraviolet absorbing agent, a nucleating agent, a lubricant, a neutralizing agent, an auxiliary stabilizer, a metal inactivating agent, a flame-retardant, a foaming agent, a filler and a pigment may be of course further incorporated in such a range that the effect of the present invention is not hampered.

The present invention will be explained in more detail below by way of Examples and Comparative Examples, but the present invention is not limited to them.

In Examples and Comparative Examples, specifically, the following compounds were used, respectively.
· Thermoplastic resin: propylene-ethylene block copolymer (MI: 9 ~10 g/10 min) (manufactured by Sumitomo Chemical Company, Limited)
· Phosphite esters: 2,4,8,10-Tetra-t-butyl-6-[3-(3-methyl-4-hydroxy-5-t-butylpheny l)propoxy]dibenzo[d,f][1,3,2]dioxaphosphepine (SUMILIZER GP, manufactured by Sumitomo Chemical Company, Limited)
· Polymer of dimethyl succinate and 4-hydroxy-2,2,6,6-tetramethyl-1-piperidineethanol (TINVIN622LD, manufactured by Ciba Specialty Chemicals)
· Hydrotalcite (DHT-4A, manufactured by Kyowa Chemical Industry Co.,Ltd.)
· Organic phosphorus-based antioxidant: Tris(2,4-di-t-butylphenyl) phosphite (IRGAFOS 168, manufactured by Ciba Specialty Chemicals)
· poly[(6-(1,1,3,3-tetramethylbutyl)-1,3,5-triazin-2,4-diyl)((2, 2, 6,6-tetramethyl-4-piperidyl)imino)hexamethylene[(2,2,6,6-tet ramethyl-4-piperidyl)imino]] (CHIMASSORB944FL, LD, manufactured by CHIMOSA)
· Bis(2,2,6,6-tetramethyl-4-piperidyl) sebacate (TINUVIN770, manufactured by Ciba Specialty Chemicals)
· Calcium stearate (calcium stearate, manufactured by KYODO CHEMICAL CO.,LTD)

### <Example 1>

Into 100 parts by weight of a thermoplastic resin were incorporated 0.1 part by weight of phosphite esters, 0.1 part by weight of a polymer of dimethyl succinate and 4-hydroxy-2,2,6,6-tetramethyl-1-piperidineethanol, and 0.05 part by weight of hydrotalcite to prepare a thermoplastic resin composition of Example 1.

### <Comparative Example 1>

Into 100 parts by weight of a thermoplastic resin was incorporated 0.05 part by weight of hydrotalcite to prepare a thermoplastic resin composition of Comparative Example 1.

### <Comparative Example 2>

Into 100 parts by weight of a thermoplastic resin was incorporated 0.1 part by weight of a polymer of dimethyl succinate and 4-hydroxy-2,2,6,6-tetramethyl-1-piperidineethanol to prepare a thermoplastic resin composition of Comparative Example 2.

### <Comparative Example 3>

Into 100 parts by weight of a thermoplastic resin was incorporated 0.1 part by weight of phosphite enters to prepare a thermoplastic resin composition of Comparative Example 3.

### <Comparative Example 4>

Into 100 parts by weight of a thermoplastic resin were incorporated 0.1 part by weight of phosphite etsers, 0.1 part by weight of poly[(6-(1,1,3,3-tetramethylbutyl)-1,3,5-triazin-2,4-diyl]((2, 2,6,6-tetramethyl-4-piperidyl)imino)hexamethylene[(2,2,6,6-tet ramethyl-4-piperidyl)imino)], and 0.05 part by weight of hydrotalcite to prepare a thermoplastic resin composition of Comparative Example 4.

### <Comparative Example 5>

Into 100 parts by weight of a thermoplastic resin were incorporated 0.1 part by weight of phosphite esters, 0.1 part by weight of bis(2,2,6,6-tetramethyl-4-piperidyl) sebacate, and 0.05 part by weight of hydrotalcite to prepare a thermoplastic resin composition of Comparative Example 5.

### <Comparative Example 6>

Into 100 parts by weight of a thermoplastic resin were incorporated 0.1 part by weight of phosphite esters, 0.1 part by weight of a polymer of dimethyl succinate and 4--hydroxy-2, 2,6, 6-tetramethyl-1-piperidineethanol, and 0.05 part by weight of calcium stearate to prepare a thermoplastic resin composition of Comparative Example 6.

### <Example 2>

According to the same manner as that of Example 1 except that an incorporation amount of phosphite esters was 0.01 part by weight, a thermoplastic resin composition of Example 2 was prepared.

### <Example 3>

According to the same manner as that of Example 1 except that an incorporation amount of phosphite esters was 0.05 part by weight, a thermoplastic resin composition of Example 3 was prepared.

### <Example 4>

According to the same manner as that of Example 1 except that an incorporation amount of phosphite esters was 0.5 part by weight, a thermoplastic resin composition of Example 4 was prepared.

### <Example 5>

According to the same manner as that of Example 1 except that an incorporation amount of phosphite esters was 1 part by weight, a thermoplastic resin composition of Example 5 was prepared.

### <Example 6>

According to the same manner as that of Example 1 except that an incorporation amount of the polymer of dimethyl succinate and 4-hydroxy-2,2,6,6-tetramethyl-1-piperidineethanol was 0.01 part by weight, a thermoplastic resin composition of Example 6 was prepared.

### <Example 7>

According to the same manner as that of Example. 1 except that an incorporation amount of the polymer of dimethyl succinate and 4-hydroxy-2,2,6,6-tetramethyl-1-piperidineethanol was 0.05 part by weight, a thermoplastic resin composition of Example 7 was prepared.

### <Example 8>

According to the same manner as that of Example 1 except that an incorporation amount of the polymer of dimethyl succinate and 4-hydroxy-2,2, 6, 6-tetramethyl-1-piperidineethanol was 0.5 part by weight, a thermoplastic resin composition of Example 8 was prepared.

### <Example 9>

According to the same manner as that of Example 1 except that an incorporation amount of the polymer of dimethyl succinate and 4-hydroxy-2,2,6,6-tetramethyl-1-piperidineethanol was 1 part by weight, a thermoplastic resin composition of Example 9 was prepared.

### <Example 10>

According to the same manner as that of Example 1 except that an incorporation amount of hydrotalcite was 0.01 part by weight, a thermoplastic resin composition of Example 10 was prepared.

### <Example 11>

According to the same manner as that of Example 1 except that an incorporation amount of hydrotalcite was 0.1 part by weight, a thermoplastic resin composition of Example 11 was prepared.

### <Example 12>

According to the same manner as that of Example 1 except that an incorporation amount of hydrotalcite was 0.5 part by weight, a thermoplastic resin composition of Example 12 was prepared.

### <Example 13>

According to the same manner as that of Example 1 except that an incorporation amount of hydrotalcite was 1 part by weight, a thermoplastic resin composition of Example 13 was prepared.

### <Example 14>

Into 100 parts by weight of a thermoplastic resin were incorporated 0.05 part by weight of phosphite esters, 0.05 part by weight of a polymer of dimethyl succinate and 4-hydroxy-2,2,6,6-tetramethyl-1-piperidineethanol, 0.05 part by weight of hydrotalcite, and 0.1 part by weight of tris(2,4-di-t-butylphenyl) phosphite as an organic phosphorus-based antioxidant to prepare a thermoplastic resin composition of Example 14.

### <Assessment test 1: processing stability>

Each of thermoplastic resin compositions of Examples 1 to 14, and Comparative Examples 1 to 6 which had been prepared as described above, respectively, was kneaded at 250°C and at a screw rotation number of 50 rpm using a monoaxial extrusion molding machine having a diameter of 30 mm (Model VS30-28 extruder, manufactured by TANABE PLASTICS) to obtain a pellet (1), and repetitive extrusion molding of kneading this pellet (1) at 250 °C and at a screw rotation number of 50 rpm using a monoaxial extrusion molding machine having a diameter of 30 mm to obtain a pellet was performed five times to obtain a pellet (2). A MI value of the pellet (1) and the pellet (2) was measured using a melt indexer (L217-E14011, manufactured by TechnolSeven Co., Ltd.) according to JIS K7210, and processing stability was assessed by a difference between a MI value of the pellet (2) and a MI value of the pellet (1) (As a difference in a MI value is smaller, it is meant that processing stability is higher). Results are shown in Table 1.

### <Assessment test 2: thermal coloration resistance test>

Each of pellets (1) and (2) obtained from Examples 1 to 14, and Comparative Examples 1 to 6 in the assessment test 1 was pressed into a sheet having a thickness of 1 mm at 230 °C using a pressing machine (PEW-5040, manufactured by Kansai roll co., ltd.), a yellowness index (YI) value was measured using a chromatometer (CM-3500d, manufactured by Konica Minolta Holdings, Inc.) according to JIS K7105, and thermal coloration resistance was assessed by a difference between a YI value of the pellet (2) and a YI value of the pellet (1) (As a difference in a YI value is smaller, it is meant that thermal coloration resistance is higher). Results are shown in Table 1.

### <Assessment test 3: NOx coloration resistance>

Each of pellets (1) obtained from thermoplastic resin compositions of Examples 1 to 14, and Comparative Examples 1 to 6 in the assessment test 1 was injection-molded into a sheet having a thickness of 1 mm at 230 °C using an injection molding machine (ROBOSHOTα-30A, manufactured by FANUC LTD.), a YI value was measured using a chromatometer (CM-3500d, manufactured by Konica Minolta Holdings, Inc.) according to JIS L0855, and the sheet was exposed to 650 ppm NOx for 2 weeks. A YI value of the sheet after NOx exposure for 2 weeks was similarly measured using the chromatometer, and NOx coloration resistance was assessed by a difference between a YI value of the sheet before NOx exposure (As a difference in a YI value is smaller, it is meant that NOx coloration resistance is higher). Results are shown in Table 1.

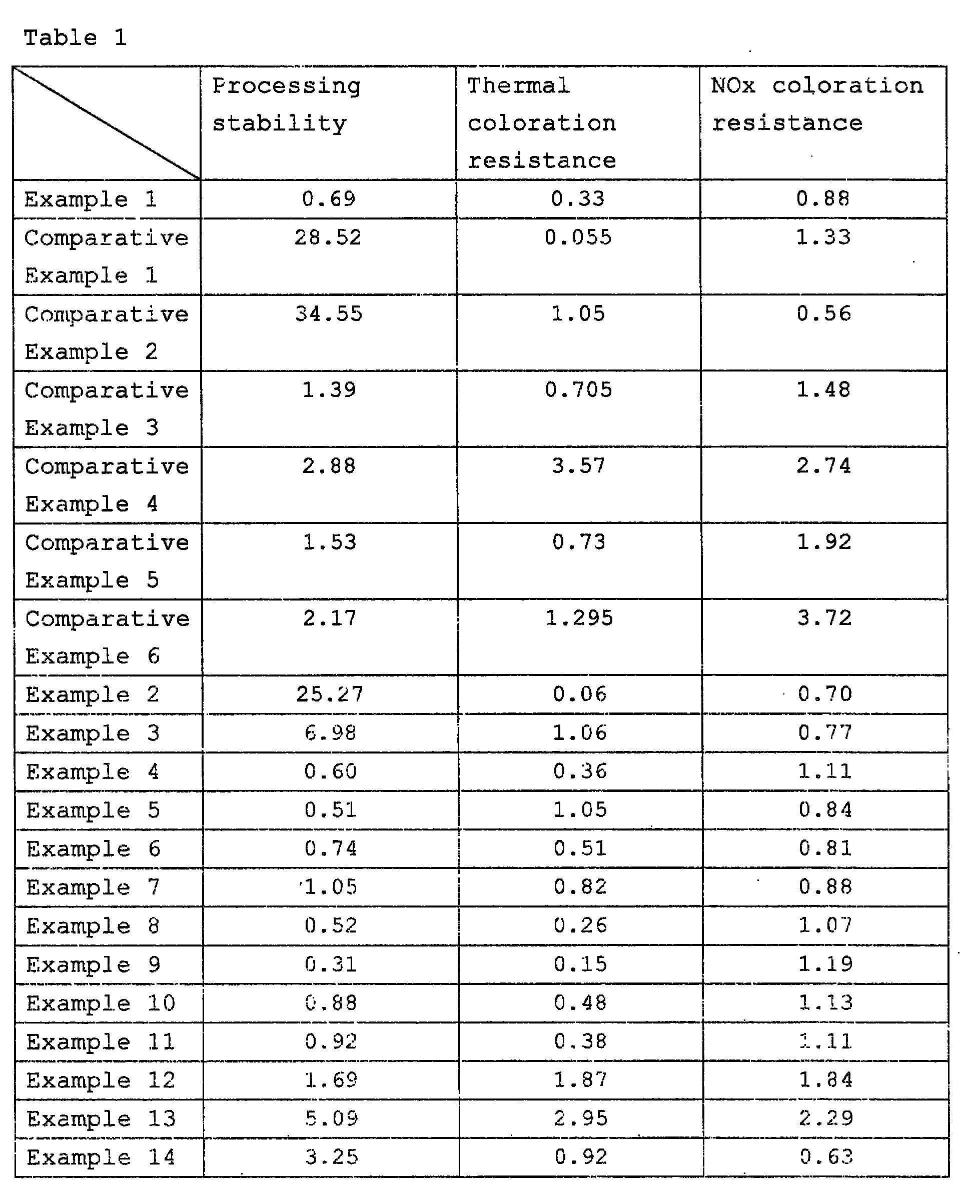

Embodiments, Examples and Comparative Examples disclosed this time are illustrative in all respects, and should be construed to be not limiting. The scope of the present invention is not shown by the aforementhioned explanation, but by claims, and all variations within meanings and the scope of equivalence of claims are intended to be included.

## Claims

1. A thermoplastic resin composition, which comprises phosphite esters represented by the following general formula (I) : 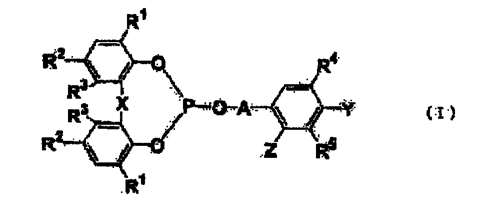 (wherein two R¹s, two R²s, R⁴ and R⁵ each represent independently a hydrogen atom, an alkyl group having a carbon number of 1 to 8, a cycloalkyl group having a carbon number of 5 to 8, an alkylcycloalkyl group having a carbon number of 6 to 12, an aralkyl group having a carbon number of 7 to 12, or a phenyl group, two R³s each represent independently a hydrogen atom or an alkyl group having a carbon number of 1 to 8, X represents a single bond, a sulfur atom or a -CHR⁶ group (R⁶ represents a hydrogen atom, an alkyl group having a carbon number of 1 to 8 or a cycloalkyl group having a carbon number of 5 to 8), A represents an alkylene group having a carbon number of 1 to 8, or a *-COR⁷ group (R⁷ represents a single bond, or an alkylene group having a carbon number of 1 to 8, and * indicates a bond on an oxygen side), one of Y and Z represents a hydroxyl group, an alkoxy group having a carbon number of 1 to 8, or an aralkyloxy group having a carbon number of 7 to 12, and the other of Y and Z represents a hydrogen atom, or an alkyl group having a carbon number of 1 to 8), a polymer of dimethyl succinate and 4-hydroxy-2,2,6,6-tetramethyl-1-piperidineethanol, and hydrotalcite in a thermoplastic resin.

2. The thermoplastic resin composition according to claim 1, wherein the composition comprises 0.005 to 5 parts by weight of the phosphite esters, 0.005 to 5 parts by weight of the polymer of dimethyl succinate and 4-hydroxy-2,2,6,6-tetramethyl-1-piperidineethanol, and 0.005 to 5 parts by weight of the hydrotalcite based on 100 parts by weight of the thermoplastic resin.

3. The thermoplastic resin composition according to Claim 2, wherein the composition comprises 0.01 to 1 part by weight of the phosphite esters, 0.01 to 1 part by weight of the polymer of dimethyl succinate and 4-hydroxy-2,2,6,6-tetramethyl-1-piperidineethanol and 0.01 to 1 part by weight of the hydrotalcite based on 100 parts by weight of the thermoplastic resin.

4. The thermoplastic resin composition according to any one of claims 1 to 3, wherein the composition comprises 0.005 to 5 parts by weight of an organic phosphorus-based antioxidant different from the phosphite esters based on 100 parts by weight of the thermoplastic resin.

5. The thermoplastic resin composition according to claim 4, wherein the organic phosphorus-based antioxidant is at least one kind organic phosphorus-based antioxidant selected from the group consisting of tris(2,4-di-t-butylphenyl) phosphite, bis(2,4-di-t-butylphenyl) pentaerythritol diphosphite, bis(2,6-di-t-butyl-4-methylphenyl) pentaerythritol diphosphite, bis(2,4-di-cumylphenyl) pentaerythritol diphosphite, and tetrakis(2,4-di-t-butylphenyl)-4,4'-biphenylene diphosphonite.

6. A method for stabilizing a thermoplastic resin, which comprises incorporating phosphite esters represented by the following general formula (I): 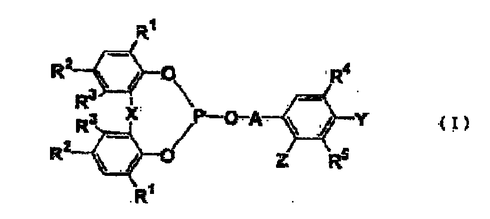 (wherein two R¹s, two R²s, R⁴ and R⁵ each represent independently a hydrogen atom, an alkyl group having a carbon number of 1 to 8, a cycloalkyl group having a carbon number of 5 to 8, an alkylcycloalkyl group having a carbon number of 6 to 12, an aralkyl group having a carbon number of 7 to 12, or a phenyl group, two R³s each represent independently a hydrogen atom or an alkyl group having a carbon number of 1 to 8, X represents a Single bond, a sulfur atom or a. -CHR⁶ group (R⁶ represents a hydrogen atom, an alkyl group having a carbon number of 1 to 8 or a cycloalkyl group having a carbon number of 5 to 8), A represents an alkylene group having a carbon number of 1 to 8, or a *-COR⁷ group (R⁷ represents a single bond, or an alkylene group having a carbon number of 1 to 8, and * indicates a bond on an oxygen side), one of Y and Z represents a hydroxyl group, an alkoxy group having a carbon number of 1 to 8 or an aralkyloxy group having a carbon number of 7 to 12, and the other of Y and Z represents a hydrogen atom or an alkyl group having a carbon number of 1 to 8), a polymer of dimethyl succinate and 4-hydroxy-2,2,6,6-tetramethyl-1-piperidineethanol, and hydrotalcite into a thermoplastic resin.

7. The method for stabilizing a thermoplastic resin according to claim 6, wherein 0.005 to 5 parts by height of the phosphite esters, 0.005 to 5 parts by weight of the polymer of dimethyl succinate and 4-hydroxy-2,2,6,6-tetramethyl-1-piperidineethanol, and 0.005 to 5 parts by weight of the hydrotalcite are incorporated based On 100 parts by weight of the thermoplastic resin.

8. The method for stabilizing a thermoplastic resin according to claim 7, wherein 0.01 to 1 part by weight of the phosphite esters, 0.01 to 4 part by weight of the polymer of dimethyl succinate and 4-hydroxy-2,2,6,6-tetramethyl-1-piperidineethanol, and 0<01 to 1 part by weight of the hydrotalcite are incorporated based on 100 parts by weight of the thermoplastic resin.

9. The method for stabilizing a thermoplastic resin according to any one of claims 6 to 8, wherein 0.005 to 5 parts by weight of an organic phosphorus-based antioxidant different from the phosphite esters is further incorporated based on 100 parts by weight of the thermoplastic resin.

10. The method for stabilizing a thermoplastic resin according to claim 9, wherein as the organic phosphorus-based antioxidant agent, at least one kind organic phosphorus-based antioxidant selected from the group consisting of tris(2,4-di-t-butylphenyl) phosphite, bis(2,4-di-t-butylphenyl) pentaerythritol diphophite, bis(2,6-di-t-butyl-4-methylphenyl) pentaerythritol diphosphite, bis(2,4-di-cumylphenyl) pentaerythritol diphosphite and tetrakis(2,4-di-t-butylphenyl)-4,4'-bisphenylene diphosphonite is incorporated.
